# EUROPÄISCHE PATENTSCHRIFT

(11) **EP 2 926 024 B1**
(45) Veröffentlichungstag und Bekanntmachung des Hinweises auf die Patenterteilung: **26.12.2018**
(21) Anmeldenummer: 13794887.3
(22) Anmeldetag: 20.11.2013
(51) Int. Cl.: F16F 9/36

(54) **VERSCHLUSSPAKET ZUM VERSCHLIESSEN EINES DÄMPFERROHRES FÜR EINEN SCHWINGUNGSDÄMPFER**
CLOSURE PACKAGE FOR CLOSING A DAMPER TUBE FOR A VIBRATION DAMPER
BOITIER D'ETANCHEITE POUR FERMER UN TUBE POUR UN AMORTISSEUR DE VIBRATIONS

(30) Priorität: 27.11.2012 DE 102012111474
(43) Veröffentlichungstag der Anmeldung: 07.10.2015
(73) Patentinhaber: ThyssenKrupp Bilstein GmbH, 58256 Ennepetal (DE)
(72) Erfinder: LEHNEN, Andreas, 54427 Kell am See (DE); STILLER, Guido, 53256 Ennepetal (DE); LUCZAK, Hanno, 45527 Hattingen (DE)
(74) Vertreter: thyssenkrupp Intellectual Property GmbH
(86) Internationale Anmeldenummer: PCT/EP2013/074232
(87) Internationale Veröffentlichungsnummer: WO 2014/082901

(56) Entgegenhaltungen:
- WO-A1-2009/136466
- US-A- 3 227 497

## Beschreibung

Die vorliegende Erfindung betrifft ein Verschlusspaket zum Verschließen eines Dämpferrohres eines Schwingungsdämpfers, mit einem Grundkörper, der zur Dichtenden Anordnung im Dämpferrohr ausgebildet ist und durch den eine Kolbenstange des Schwingungsdämpfers dichtend hindurchführbar ist, und wobei der Grundkörper eine Öffnung aufweist, in der eine Führungsbuchse zur Führung der Kolbenstange eingebracht ist und wobei wenigstens eine Dichtungseinheit zur dichtenden Anlage an der Kolbenstange vorgesehen ist.

### STAND DER TECHNIK

Ein Verschlusspaket zum Verschließen eines Dämpferrohres dient zugleich zur Hindurchführung der Kolbenstange, die innenseitig im Dämpferrohr mit einem Arbeitskolben des Schwingungsdämpfers verbunden ist. Zur Führung der Kolbenstange dient eine Führungsbuchse, und in Abhängigkeit der Betriebssituation des Schwingungsdämpfers können Querkräfte auf die Kolbenstange wirken, die über die Führungsbuchse aufgenommen werden müssen. Das Dämpferrohr ist mit einer Dämpfungsflüssigkeit gefüllt, sodass das Verschlusspaket ferner die Aufgabe erfüllen muss, das Dämpferrohr flüssigkeitsdicht zu verschließen. Hierbei entsteht insbesondere das Problem, die Dichtungseinheit so auszuführen, dass trotz der durch die Öffnung im Grundkörper hindurchgeführten Kolbenstange ein druckdichter Verschluss des Dämpferrohres erzeugt wird. Aufgrund der zu erfüllenden Aufgaben des Verschlusspaketes wird dieses häufig auch als Dichtungs- und Führungspaket bezeichnet.

In der DE 10 2007 005 690 A1 ist beispielsweise ein Verschlusspaket zum Verschließen eines Dämpferrohres eines Schwingungsdämpfers gezeigt, und eine Führungsbuchse dient zur Führung der Kolbenstange, die in einem Führungsteil des Verschlusspaketes eingebracht ist. Weiterhin gezeigt ist eine Dichtungseinheit, die in einem Trägerteil des Verschlusspaketes aufgenommen ist. Der Grundkörper des Verschlusspaketes ist damit zweiteilig ausgeführt, wodurch das Verschlusspaket aufwendig ausgestaltet werden muss.

Aus der US 3 227 497 A ist ein Schwingungsdämpfer mit Dichtungsstrukturen für Kolbenstangen bekannt.

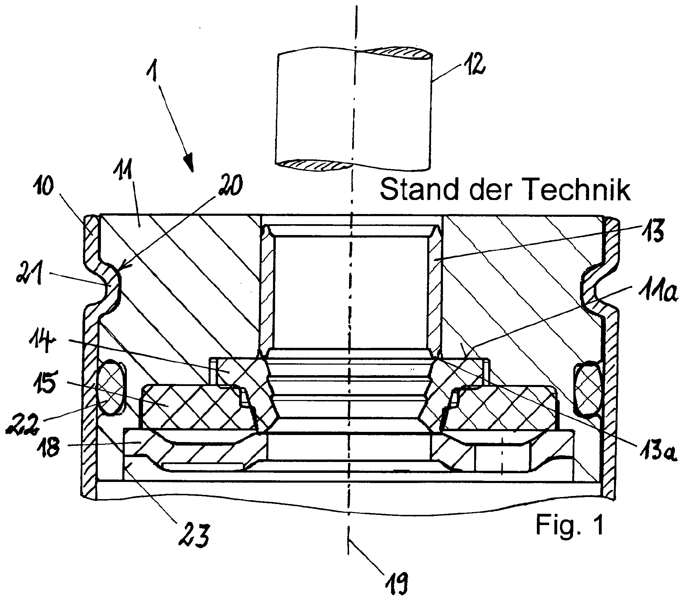

Figur 1 zeigt eine Querschnittsansicht eines Verschlusspaketes 1 gemäß einem weiteren, allgemeinen Stand der Technik, und das Verschlusspaket 1 ist endseitig in einem Dämpferrohr 10 gehalten. Als wesentlicher Bestandteil des Verschlusspaketes 1 ist ein Grundkörper 11 gezeigt, und zur haltenden Aufnahme des Grundkörpers 11 im Dämpferrohr 10 weist dieser eine umlaufende Nut 20 auf, in die ein Einpressbereich 21 des Dämpferrohres 10 beispielsweise durch ein Außenrund-Rollieren aufgrund plastischer Verformung eingedrückt ist. Damit entsteht eine mechanisch belastbare, haltende Anordnung des Grundkörpers 11 im Dämpferrohr 10. Weiterhin ist eine O-Ringdichtung 22 zwischen dem Grundkörper 11 und der Innenseite des Dämpferrohres 10 vorgesehen, durch die der mit Dämpfungsflüssigkeit gefüllte Innenraum des Dämpferrohres 10 druckdicht verschlossen ist.

Die Kolbenstange 12 ist über eine in einer Öffnung im Grundkörper 11 eingebrachte Führungsbuchse 13 in einer Axialrichtung 19 geführt, sodass die Kolbenstange 12 im Dämpferrohr 10 eine Hubbewegung ausführen kann. Dabei nimmt die Führungsbuchse 13 auch seitlich zur Axialrichtung 19 wirkende Kräfte auf. Zur haltenden Anordnung der Führungsbuchse 13 ist diese in die Öffnung im Grundkörper 11 eingepresst, wobei durch einen längeren Betrieb des Schwingungsdämpfers ein dauerhafter, fester Sitz der Führungsbuchse 13 nicht zwingend gewährleistet ist. Abhängig von Temperatureinflüssen und dem Dehnungsverhalten der beteiligten Werkstoffe bei einer Temperaturänderung kann sich der Presssitz der Führungsbuchse 13 in der Öffnung im Grundkörper 11 lösen, sodass die Führungsbuchse 13 aus der Öffnung im Grundkörper 11 herauswandern und damit verloren gehen kann, was ein Totalversagen des Schwingungsdämpfers zur Folge hätte.

Unterhalb der Führungsbuchse 13 ist eine Dichtungseinheit 14, 15 gezeigt, und die Dichtungseinheit 14, 15 weist ein Stangendichtelement 14 und ein äußeres Dichtelement 15 auf. Das Stangendichtelement 14 dient zur berührenden Dichtung gegen die Kolbenstange 11 und umschließt diese ringförmig. Das äußere Dichtelement 15 dient zur Abstützung des Stangendichtelementes 14, wobei die Dichtungseinheit 14, 15 durch eine Verschlussplatte 18 im Grundkörper 11 des Verschlusspaketes 1 gehalten ist. Die Verschlussplatte 18 ist dabei im Aufnahmesitz 23 im Grundkörper 11 eingepresst.

Das Stangendichtelement 14 liegt oberseitig gegen eine Dichtanlagefläche 11a im Grundkörper 11 an. Im radial innenseitigen Bereich des Stangendichtelementes 14 gelangt das untere Ende 13a der Führungsbuchse 13 gegen das Stangendichtelement 14 zur Anlage, und im Betrieb des Schwingungsdämpfers erfolgt durch die Hubbewegung der Kolbenstange 12 entlang der Axialrichtung 19 eine permanente Bewegung des Stangendichtelementes 14 gegen das untere Ende 13a der Führungsbuchse 13. Dadurch kann es dauerhaft zu Beschädigungen des Stangendichtelementes 14 kommen, und die Folge ist ein erhöhtes Extrusionsverhalten des unter Druck stehenden Stangendichtelementes 14, ferner ist ein starker Verschleiß sowie lokale Beschädigung der Oberfläche des Stangendichtelementes 14 die Folge. Das leicht angeschrägte untere Ende 13a der Führungsbuchse 13 ist erforderlich, da die Schräge eine Montagehilfe darstellt, ferner ist die innenseitige Schräge zur Verbesserung der Führung der Kolbenstange 12 erforderlich. Durch die starke Belastung des Stangendichtelementes 14 kann sich ein frühzeitiges Versagen der Dichtungseinheit 14, 15 einstellen, was neben der nicht sicheren Anordnung der Führungsbuchse 13 im Grundkörper 11 einen weiteren Nachteil des gezeigten Verschlusspaketes 1 darstellt.

### OFFENBARUNG DER ERFINDUNG

Aufgabe der Erfindung ist es, ein Verschlusspaket zum Verschließen eines Dämpferrohres eines Schwingungsdämpfers zu schaffen, das eine verbesserte Betriebsfestigkeit des Schwingungsdämpfers erlaubt, insbesondere ist es die Aufgabe, ein Verschlusspaket für einen Schwingungsdämpfer mit einer längeren Gebrauchsdauer zu schaffen.

Diese Aufgabe wird ausgehend von einem Verschlusspaket zum Verschließen eines Dämpferrohres eines Schwingungsdämpfers gemäß dem Oberbegriff des Anspruchs 1 und ausgehend von einem Schwingungsdämpfer mit einem solchen Verschlusspaket gemäß dem Oberbegriff des Anspruches 6 in Verbindung mit den jeweils kennzeichnenden Merkmalen gelöst. Vorteilhafte Weiterbildungen der Erfindung sind in den abhängigen Ansprüchen angegeben.
Die Erfindung schließt die technische Lehre ein, dass die Führungsbuchse an einer Endseite einen umlaufenden, radial nach außen weisenden Kragen aufweist, an den die Dichtungseinheit angrenzend angeordnet ist.
Durch einen an der Führungsbuchse radial nach außen weisenden Kragen wird die Möglichkeit geschaffen, die Führungsbuchse formschlüssig im Grundkörper des Verschlusspaketes aufzunehmen. Dadurch wird die Aufgabe gelöst, dass sich die Führungsbuchse durch den Betrieb des Schwingungsdämpfers nicht mehr aus dem Grundkörper des Verschlusspaketes lösen kann, da durch den Formschluss des Kragens der Führungsbuchse im Grundkörper ein Herauswandern der Führungsbuchse aus der Öffnung im Grundkörper verhindert ist.
Als weiterer, wesentlicher Vorteil bildet der Kragen der Führungsbuchse eine verbesserte Anlagegeometrie für das Stangendichtelement der Dichtungseinheit, sodass auch bei längerem Betrieb des Schwingungsdämpfers eine Beschädigung des Stangendichtelementes verhindert ist. Der Kragen kann auch als Bund an der Führungsbuchse angesehen werden, wobei die Innenseite der Führungsbuchse zur Führung der Kolbenstange dient und wobei die Außenseite der Führungsbuchse zur formschlüssigen Anordnung in der Öffnung des Grundkörpers vorgesehen ist. Vorzugsweise befindet sich dabei der Kragen endseitig an der Führungsbuchse, sodass diese beispielsweise einen L-förmigen, umlaufenden Buchsenquerschnitt aufweist.
Gemäß einer bevorzugten Ausführungsform des Verschlusspaketes und insbesondere zur Bildung der Dichtungseinheit ist diese wenigstens aus einem Stangendichtelement und einem äußeren Dichtelement ausgebildet, wobei das Stangendichtelement an eine die Führungsbuchse axial abschließende plane Endfläche des Kragens angrenzt. Das äußere Dichtelement dient dabei zur radialen, teilweise auch zur axialen Abstützung des Stangendichtelementes, wobei das Stangendichtelement in Kontakt mit der Oberfläche der Kolbenstange gelangt. Ferner gelangt das Stangendichtelement mit einer Oberseite gegen die abschließende plane Endfläche des Kragens und bildet mit dieser eine Plananlage, die nicht mehr zum frühzeitigen Versagen des Stangendichtelementes führt.

Erfindungsgemäß weist der Grundkörper einen umlaufenden Kragensitz auf, in den der Kragen der Führungsbuchse einsitzt, wobei insbesondere die Plananlage des Kragens mit einer Dichtanlagefläche am Grundkörper abschließt. Die Plananlage des Kragens liegt damit in der Ebene der Dichtanlagefläche am Grundkörper, sodass trotz des an der Führungsbuchse befindlichen Kragens kein störender Absatz zur Anlage des Stangendichtelementes an den Grundkörper entsteht, sodass auch damit eine Beschädigung des Stangendichtelementes vermieden wird.
Die formschlüssige Aufnahme der Führungsbuchse mit dem Kragen entsteht dadurch, dass die Führungsbuchse durch den Kragen zwischen dem Kragensitz im Grundkörper und der Dichtungseinheit, insbesondere dem Stangendichtelement, in der Axialrichtung des Schwingungsdämpfers verliersicher gehalten ist. Zur Aufnahme der Dichtungseinheit mit dem Stangendichtelement und dem äußeren Dichtelement ist eine Verschlussplatte vorgesehen, mit der die Dichtungseinheit im Grundkörper gehalten ist, wobei das äußere Dichtelement einen Stützring zwischen dem Stangendichtelement und der Verschlussplatte bildet. Zur Montage des Verschlusspaketes muss damit zunächst die Führungsbuchse mit dem Kragen in die Öffnung in den Grundkörper eingeführt werden, anschließend werden das Stangendichtelement und das äußere Dichtelement an den Grundkörper angeordnet, und schließlich wird die Verschlussplatte in den Aufnahmesitz im Grundkörper beispielsweise eingepresst oder in diesem verstemmt.
Die Führungsbuchse mit dem angeformten Kragen kann einteilig ausgeführt sein und bevorzugt aus einem Gleitlagerwerkstoff bestehen. Als besonders geeignet haben sich Kunststoffmaterialien als Gleitlagerwerkstoff erwiesen, wobei auch ein Buntmetall, beispielsweise ein Bronzewerkstoff, zur Bildung der Führungsbuchse geeignet ist. Dabei steht ein Angleichen von Wärmeausdehnungskoeffizienten zwischen der Führungsbuchse und dem Grundkörper nicht mehr zwingend im Vordergrund, um eine Pressung der Führungsbuchse in der Öffnung im Grundkörper zu erhalten. Durch die formschlüssige Aufnahme der Führungsbuchse im Grundkörper kann daher die Auswahl der Werkstoffe zur Bildung der Führungsbuchse erweitert werden, ohne dass der Werkstoff einen Ausdehnungskoeffizienten aufweisen muss, der mit dem Ausdehnungskoeffizienten des Werkstoffes zur Bildung des Grundkörpers korrespondiert.
Der Kragen kann eine axiale Dicke aufweisen, die im Wesentlichen der Wanddicke der Führungsbuchse entspricht. Erfindungsgemäß überragt die Führungsbuchse das an diese angrenzende Stangendichtelement nach innen wenigstens geringfügig radial. Insbesondere dadurch wird vermieden, dass ein Extrusionsspalt entsteht, in den das Stangendichtelement eingezogen wird.
Die Erfindung richtet sich ferner auf einen Schwingungsdämpfer mit einem Dämpferrohr, das mit einem erfindungsgemäßen Verschlusspaket verschlossen ist, wobei das Verschlusspaket einen Grundkörper aufweist, der zur dichtenden Anordnung im Dämpferrohr angeordnet ist und durch den eine Kolbenstange des Schwingungsdämpfers dichtend hindurchgeführt ist, und wobei der Grundkörper eine Öffnung aufweist, in der eine Führungsbuchse zur Führung der Kolbenstange eingebracht ist und wobei eine Dichtungseinheit zur dichtenden Anlage an der Kolbenstange vorgesehen ist. Die Führungsbuchse weist dabei an einer Endseite einen umlaufenden, radial nach außen weisenden Kragen auf, an den die Dichtungseinheit angrenzend angeordnet ist. Die Merkmale und zugehörigen Vorteile, die in Zusammenhang mit dem Verschlusspaket vorstehend beschrieben sind, finden für den erfindungsgemäßen Schwingungsdämpfer selbstverständlich gleichermaßen Berücksichtigung.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Querschnittsansicht durch ein Verschlusspaket gemäß dem Stand der Technik,
- Figur 2: eine Querschnittsansicht eines Verschlusspaketes mit einer erfindungsgemäßen Führungsbuchse und
- Figur 2a: eine Detailansicht der Führungsbuchse mit einem angeformten Kragen in Kontakt mit einem Stangendichtelement einer Dichtungseinheit.

Figur 1 ist in Zusammenhang mit dem einleitend aufgeführten Stand der Technik bereits beschrieben worden.

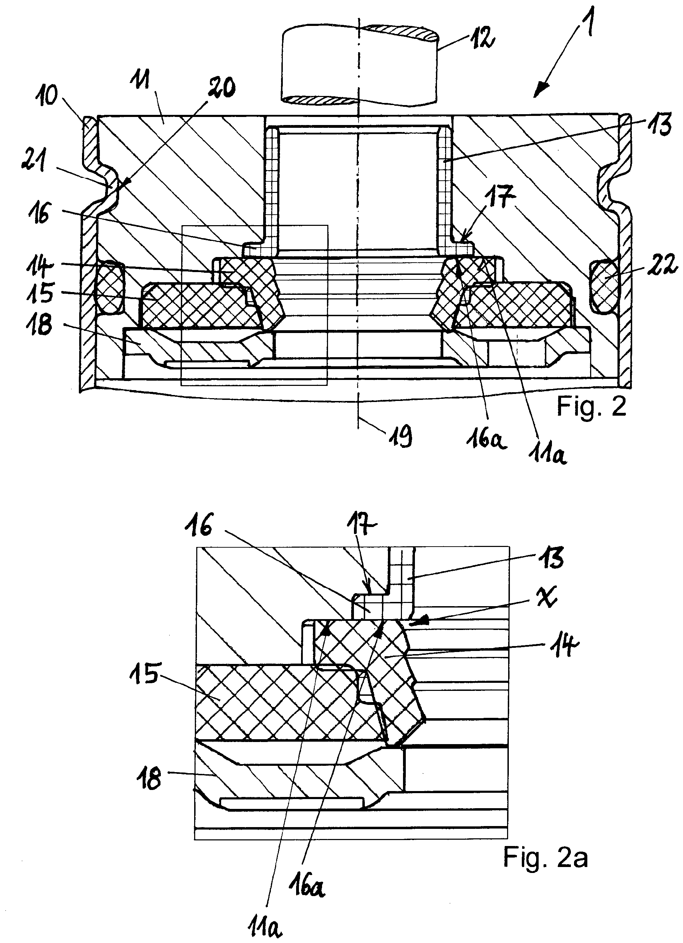

Figur 2 zeigt in einer quergeschnittenen Ansicht ein Ausführungsbeispiel eines Verschlusspaketes 1 zum endseitigen Verschließen eines Dämpferrohres 10 eines Schwingungsdämpfers, wie dieser beispielsweise eingesetzt werden kann als Bestandteil des Fahrwerkes in einem Kraftfahrzeug. Das Verschlusspaket 1 weist einen Grundkörper 11 auf, der beispielsweise aus einem metallischen Werkstoff ausgebildet ist. Um den Grundkörper 11 im Wesentlichen endseitig verliersicher im Dämpferrohr 10 anzuordnen, weist dieser eine umlaufende Nut 20 auf, in die ein Einpressbereich 21 des Dämpferrohres 10 beispielsweise durch ein Außenrund-Rollieren eingepresst ist. Durch das Rollieren wird ein Bereich des Dämpferrohres 10 plastisch verformt und in die umlaufende Nut 20 eingedrückt, in der der so gebildete Einpressbereich 21 des Dämpferrohres 10 anschließend verbleibt. Um die Anordnung des Grundkörpers 11 im Dämpferrohr 10 fluiddicht auszuführen, ist eine O-Ringdichtung 22 im Grundkörper 11 aufgenommen, und die O-Ringdichtung 22 dichtet den umlaufenden Bereich zwischen der Innenseite des Dämpferrohres 10 und der Außenseite des Grundkörpers 11 ab.

Im Grundkörper 11 ist innenseitig eine axial verlaufende Öffnung eingebracht, die als Bohrung ausgebildet ist und sich in einer Axialrichtung 19 erstreckt, die der Hubrichtung der Kolbenstange 12 des Schwingungsdämpfers entspricht. Im Betrieb kann sich die Kolbenstange 12 in der Axialrichtung 19 hin- und herbewegen, und muss daher im Grundkörper 11 des Verschlusspaketes 1 gleitend geführt werden. Hierzu ist eine Führungsbuchse 13 in der Öffnung im Grundkörper 11 eingesetzt, und die Führungsbuchse 13 führt die Kolbenstange 12 über ihre Innenseite. Im Betrieb des Schwingungsdämpfers können auf die Kolbenstange 12 Querkräfte wirken, die von der Führungsbuchse 13 aufgenommen werden.

Zur Abdichtung der durch den Grundkörper 11 hindurchgeführten Kolbenstange 12 ist eine Dichtungseinheit 14, 15 vorgesehen, die aus einem Stangendichtelement 14 und einem äußeren Dichtelement 15 aufgebaut ist. Das Stangendichtelement 14 gelangt mit der Kolbenstange 12 in unmittelbare Berührung und umschließt diese ringförmig, wobei das äußere Dichtelement 15 zur Stützung des Stangendichtelementes 14 dient. Das Stangendichtelement 14 und das äußere Dichtelement 15 ist aus einem hochelastischen Kunststoffmaterial, insbesondere aus einem Gummimaterial, ausgebildet, und ist die Kolbenstange 12 durch das Stangendichtelement 14 hindurchgeführt, so weitet sich dieses leicht auf.

Die Dichtungseinheit 14, 15 ist über eine Verschlussplatte 18 unterseitig im Grundkörper 11 aufgenommen, und die Verschlussplatte 18 sitzt in einem Aufnahmesitz 23 innenseitig im Grundkörper 11 ein, und ist in dieser beispielsweise eingepresst oder verstemmt. Die Dichtungseinheit 14, 15 und die Verschlussplatte 18 weisen dabei in Richtung zur Innenseite des Dämpferrohres 10 und sitzen folglich auf der Unterseite im Grundkörper 11 ein.

Die Führungsbuchse 13 verfügt erfindungsgemäß über einen Kragen 16, der sich radial nach außen erstreckt und das in Richtung zur Dichtungseinheit 14, 15 weisende Ende der Führungsbuchse 13 abschließt. Der umlaufende Kragen 16 bildet damit eine Art Fuß der Führungsbuchse 13 mit einer unteren planen Endfläche 16a des Kragens 16, gegen die das Stangendichtelement 14 der Dichtungseinheit 14 anliegen kann. Mit besonderem Vorteil kann die untere plane Endfläche 16a des Kragens 16 eine gemeinsame Ebene bilden mit einer Dichtanlagefläche 11a im Grundkörper 11, sodass ein äußerer Bereich des Stangendichtelementes 14 gegen die Dichtanlagefläche 11a und ein innerer Bereich des Stangendichtelementes 14 gegen die plane Endfläche 16a des Kragens 16 anliegen kann, wobei die Dichtanlagefläche 11a und die plane Endfläche 16a eine gemeinsame, umlaufende Plananlage für das Stangendichtelement 14 bilden. In Zusammenhang mit der Detailfigur 2a ist der Bereich des Kragens 16 der Führungsbuchse 13 einsitzend in einem Kragensitz 17 im Grundkörper 11 genauer beschrieben.

Figur 2a zeigt einen in Figur 2 markierten Ausschnitt der Anordnung des Kragens 16 der Führungsbuchse 13 im Grundkörper 11. Im Grundkörper 11 ist ein Kragensitz 17 eingebracht, in den der Kragen 16 einsitzt. Erst damit ergibt sich eine gemeinsame Ebene der unterseitigen planen Endfläche 16a des Kragens 16 mit der Dichtanlagefläche 11a im Grundkörper 11.

Der besondere Vorteil des Kragens 16 liegt darin, dass die Führungsbuchse 13 zwischen dem Kragensitz 17 im Grundkörper 11 und der Dichtungseinheit 14, 15 formschlüssig gehalten ist, und in Axialrichtung 19 nicht aus der Öffnung im Grundkörper 11 gelangen kann. Damit ergibt sich insbesondere eine verbesserte Freiheit bei der Materialwahl der Führungsbuchse 13 in Bezug auf die Materialwahl des Grundkörpers 11, und es ist keine Presspassung der Führungsbuchse 13 in der Öffnung im Grundkörper 11 erforderlich, die so beschaffen sein muss, dass die Führungsbuchse 13 nur über die Pressung dauerhaft in der Öffnung im Grundkörper 11 gehalten werden muss.

Als weiterer Vorteil des Kragens 16 am unteren Ende der Führungsbuchse 13 ergibt sich dadurch, dass eine Übergangsstelle X zwischen der inneren, der Kolbenstange 12 zugewandten Kante am Stangendichtelement 14 und der Kante am Kragen 16 der Führungsbuchse 13 entsteht. Der Übergangsbereich X ist dabei so beschaffen, dass die Innenseite des Kragens 16, die in die Lauffläche für die Führung der Kolbenstange 12 in der Führungsbuchse 13 übergeht, den oberen Bereich des Stangendichtelementes 14 radial nach innen überragt. Erst damit wird verhindert, dass Material des Stangendichtelementes 14 durch elastische Verformung in den Führungsspalt zwischen der Führungsbuchse 13 und der Kolbenstange 12 eingezogen werden kann, wodurch das Stangendichtelement 14 zerstört würde.
Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumliche Anordnungen, können sowohl für sich als auch in den verschiedensten Kombinationen im Rahmen der folgenden Patentansprüche erfindungswesentlich sein.

### Bezugszeichenliste

- 1: Verschlusspaket
- 10: Dämpferrohr
- 11: Grundkörper
- 11a: Dichtanlagefläche
- 12: Kolbenstange
- 13: Führungsbuchse
- 13a: unteres Ende der Führungsbuchse
- 14: Dichtungseinheit, Stangendichtelement
- 15: Dichtungseinheit, äußeres Dichtelement
- 16: Kragen
- 16a: plane Endfläche des Kragens
- 17: Kragensitz
- 18: Verschlussplatte
- 19: Axialrichtung
- 20: umlaufende Nut
- 21: Einpressbereich
- 22: O- Ringdichtung
- 23: Aufnahmesitz

- X: Übergangsstelle

## Patentansprüche

1. Verschlusspaket (1) zum Verschließen eines Dämpferrohres (10) eines Schwingungsdämpfers, mit einem Grundkörper (11), der zur dichtenden Anordnung im Dämpferrohr (10) ausgebildet ist und durch den eine Kolbenstange (12) des Schwingungsdämpfers dichtend hindurchführbar ist, wobei der Grundkörper (11) eine Öffnung aufweist, in der eine Führungsbuchse (13) zur Führung der Kolbenstange (12) eingebracht ist, wobei wenigstens eine Dichtungseinheit (14, 15) zur dichtenden Anlage an der Kolbenstange (12) vorgesehen ist, wobei die Führungsbuchse (13) an einer Endseite einen umlaufenden, radial nach außen weisenden Kragen (16) aufweist, an den die Dichtungseinheit (14) angrenzend angeordnet ist, wobei die Dichtungseinheit (14, 15) wenigstens aus einem Stangendichtelement (14) und einem äußeren Dichtelement (15) ausgebildet ist, wobei das Stangendichtelement (14) an eine die Führungsbuchse (13) axial abschließende plane Endfläche (16a) des Kragens (16) angrenzt, wobei der Grundkörper (11) einen umlaufenden Kragensitz (17) aufweist, in den der Kragen (16) einsitzt, insbesondere so, dass die plane Endfläche (16a) des Kragens (16) mit der Dichtanlagefläche (11a) am Grundkörper (11) abschließt, wobei eine Verschlussplatte (18) vorgesehen ist, mit der die Dichtungseinheit (14, 15) im Grundkörper (11) gehalten ist, wobei das äußere Dichtelement (15) einen Stützring zwischen dem Stangendichtelement (14) und der Verschlussplatte bildet, **dadurch gekennzeichnet, dass** die Führungsbuchse (13) das an diese angrenzende Stangendichtelement (14) im Kontaktbereich zwischen der Führungsbuchse (13) und der Dichtungseinheit (14) nach innen radial überragt.

2. Verschlusspaket (1) nach Anspruch 1, **dadurch gekennzeichnet, dass** die Führungsbuchse (13) durch den Kragen (16) zwischen dem Kragensitz (17) und der Dichtungseinheit (14, 15) in einer Axialrichtung (19) des Schwingungsdämpfers verliersicher gehalten ist.

3. Verschlusspaket (1) nach einem der vorgenannten Ansprüche, **dadurch gekennzeichnet, dass** die Führungsbuchse (13) aus einem Kunststoff-Gleitlagerwerkstoff einteilig ausgebildet ist.

4. Verschlusspaket (1) nach einem der vorgenannten Ansprüche, **dadurch gekennzeichnet, dass** die Führungsbuchse (13) in die Öffnung im Grundkörper (11) eingepresst ist.

5. Verschlusspaket (1) nach einem der vorgenannten Ansprüche, **dadurch gekennzeichnet, dass** der Kragen (16) eine axiale Dicke aufweist, die im Wesentlichen der Wanddicke der Führungsbuchse (13) entspricht.

6. Schwingungsdämpfer mit einem Dämpferrohr (10), das mit einem Verschlusspaket (1) verschlossen ist, wobei das Verschlusspaket (1) einen Grundkörper (11) aufweist, der zur dichtenden Anordnung im Dämpferrohr (10) angeordnet ist und durch die eine Kolbenstange (12) des Schwingungsdämpfers dichtend hindurchgeführt ist, wobei der Grundkörper (11) eine Öffnung aufweist, in der eine Führungsbuchse (13) zur Führung der Kolbenstange (12) eingebracht ist, wobei wenigstens eine Dichtungseinheit (14, 15) zur dichtenden Anlage an der Kolbenstange (12) vorgesehen ist, wobei die Führungsbuchse (13) an einer Endseite einen umlaufenden, radial nach außen weisenden Kragen (16) aufweist, an den die Dichtungseinheit (14) angrenzend angeordnet ist, wobei die Dichtungseinheit (14, 15) wenigstens aus einem Stangendichtelement (14) und einem äußeren Dichtelement (15) ausgebildet ist, wobei das Stangendichtelement (14) an eine die Führungsbuchse (13) axial abschließende plane Endfläche (16a) des Kragens (16) angrenzt, wobei der Grundkörper (11) einen umlaufenden Kragensitz (17) aufweist, in den der Kragen (16) einsitzt, insbesondere so, dass die plane Endfläche (16a) des Kragens (16) mit der Dichtanlagefläche (11a) am Grundkörper (11) abschließt, wobei eine Verschlussplatte (18) vorgesehen ist, mit der die Dichtungseinheit (14, 15) im Grundkörper (11) gehalten ist, wobei das äußere Dichtelement (15) einen Stützring zwischen dem Stangendichtelement (14) und der Verschlussplatte bildet, **dadurch gekennzeichnet, dass** die Führungsbuchse (13) das an diese angrenzende Stangendichtelement (14) im Kontaktbereich zwischen der Führungsbuchse (13) und der Dichtungseinheit (14) nach innen radial überragt.

## Claims

1. Closure pack (1) for closing off a damper tube (10) of a vibration damper, having a main body (11) which is designed for sealing arrangement in the damper tube (10) and through which a piston rod (12) of the vibration damper can be sealingly guided, wherein the main body (11) has an opening in which a guide bushing (13) for guiding the piston rod (12) is inserted, wherein at least one seal unit (14, 15) for sealing contact with the piston rod (12) is provided, wherein the guide bushing (13) has, on an end side, an encircling, radially outwardly pointing collar (16), adjacent to which the seal unit (14) is arranged, wherein the seal unit (14, 15) is formed at least from a rod sealing element (14) and an outer sealing element (15), wherein the rod sealing element (14) is adjacent to a planar end surface (16a), which forms an axial termination of the guide bushing (13), of the collar (16), wherein the main body (11) has an encircling collar seat (17) in which the collar (16) is seated, in particular such that the planar end surface (16a) of the collar (16) terminates flush with a sealing contact surface (11a) on the main body (11), wherein a closure plate (18) is provided, by means of which the seal unit (14, 15) is held in the main body (11), wherein the outer seal element (15) forms a support ring between the rod sealing element (14) and the closure plate, **characterized in that** the guide bushing (13) projects radially inward beyond the adjacent rod sealing element (14) in the contact region between the guide bushing (13) and the seal unit (14).

2. Closure pack (1) according to Claim 1, **characterized in that** the guide bushing (13) is held captively between the collar seat (17) and the seal unit (14, 15) in an axial direction (19) of the vibration damper by way of the collar (16).

3. Closure pack (1) according to one of the preceding claims, **characterized in that** the guide bushing (13) is formed in one piece from a plastics plain bearing material.

4. Closure pack (1) according to one of the preceding claims, **characterized in that** the guide bushing (13) is pressed into the opening in the main body (11).

5. Closure pack (1) according to one of the preceding claims, **characterized in that** the collar (16) has an axial thickness which substantially corresponds to the wall thickness of the guide bushing (13).

6. Vibration damper having a damper tube (10) which is closed off by means of a closure pack (1), wherein the closure pack (1) has a main body (11) which is arranged for sealing arrangement in the damper tube (10) and through which a piston rod (12) of the vibration damper is sealingly guided, wherein the main body (11) has an opening in which a guide bushing (13) for guiding the piston rod (12) is inserted, wherein at least one seal unit (14, 15) for sealing contact with the piston rod (12) is provided, wherein the guide bushing (13) has, on an end side, an encircling, radially outwardly pointing collar (16), adjacent to which the seal unit (14) is arranged, wherein the seal unit (14, 15) is formed at least from a rod sealing element (14) and an outer sealing element (15), wherein the rod sealing element (14) is adjacent to a planar end surface (16a), which forms an axial termination of the guide bushing (13), of the collar (16), wherein the main body (11) has an encircling collar seat (17) in which the collar (16) is seated, in particular such that the planar end surface (16a) of the collar (16) terminates flush with a sealing contact surface (11a) on the main body (11), wherein a closure plate (18) is provided, by means of which the seal unit (14, 15) is held in the main body (11), wherein the outer seal element (15) forms a support ring between the rod sealing element (14) and the closure plate, **characterized in that** the guide bushing (13) projects radially inward beyond the adjacent rod sealing element (14) in the contact region between the guide bushing (13) and the seal unit (14).

## Revendications

1. Ensemble de fermeture (1) pour fermer un tube d'amortisseur (10) d'un amortisseur de vibrations, comprenant un corps de base (11) qui est réalisé de manière à être disposé hermétiquement dans le tube d'amortisseur (10) et à travers lequel une tige de piston (12) de l'amortisseur de vibrations peut être guidée de manière hermétique, le corps de base (11) présentant une ouverture dans laquelle est introduite une douille de guidage (13) pour le guidage de la tige de piston (12), au moins une unité d'étanchéité (14, 15) étant prévue pour s'appliquer de manière hermétique contre la tige de piston (12), la douille de guidage (13) présentant, au niveau d'un côté d'extrémité, une bride (16) périphérique orientée radialement vers l'extérieur, en position adjacente contre laquelle est disposée l'unité d'étanchéité (14), l'unité d'étanchéité (14, 15) étant réalisée à partir d'au moins un élément d'étanchéité de tige (14) et d'un élément d'étanchéité extérieur (15), l'élément d'étanchéité de tige (14) étant adjacent à une surface d'extrémité plane (16a) de la bride (16) terminant axialement la douille de guidage (13), le corps de base (11) présentant un siège de bride périphérique (17) dans lequel s'insère la bride (16), notamment de telle sorte que la surface d'extrémité plane (16a) de la bride (16) se termine avec la surface d'appui d'étanchéité (11a) contre le corps de base (11), une plaque de fermeture (18) étant prévue, avec laquelle l'unité d'étanchéité (14, 15) est retenue dans le corps de base (11), l'élément d'étanchéité extérieur (15) formant une bague de support entre l'élément d'étanchéité de tige (14) et la plaque de fermeture, **caractérisé en ce que** la douille de guidage (13) dépasse radialement vers l'intérieur au-delà de l'élément d'étanchéité de tige adjacent à celle-ci (14) dans la région de contact entre la douille de guidage (13) et l'unité d'étanchéité (14) .

2. Ensemble de fermeture (1) selon la revendication 1, **caractérisé en ce que** la douille de guidage (13) est retenue de manière imperdable par la bride (16) entre le siège de bride (17) et l'unité d'étanchéité (14, 15) dans une direction axiale (19) de l'amortisseur de vibrations.

3. Ensemble de fermeture (1) selon l'une quelconque des revendications précédentes, **caractérisé en ce que** la bride de guidage (13) est réalisée d'une seule pièce en un matériau de palier lisse en plastique.

4. Ensemble de fermeture (1) selon l'une quelconque des revendications précédentes, **caractérisé en ce que** la douille de guidage (13) est pressée dans l'ouverture dans le corps de base (11).

5. Ensemble de fermeture (1) selon l'une quelconque des revendications précédentes, **caractérisé en ce que** la bride (16) présente une épaisseur axiale qui correspond essentiellement à l'épaisseur de paroi de la douille de guidage (13).

6. Amortisseur de vibrations comprenant un tube amortisseur (10) qui est fermé avec un ensemble de fermeture (1), l'ensemble de fermeture (1) présentant un corps de base (11) qui est disposé dans le tube d'amortissement (10) en vue d'un agencement hermétique et à travers lequel une tige de piston (12) de l'amortisseur de vibrations est guidée de manière hermétique, le corps de base (11) présentant une ouverture dans laquelle est introduite une douille de guidage (13) pour le guidage de la tige de piston (12), au moins une unité d'étanchéité (14, 15) pour l'application hermétique contre la tige de piston (12) étant prévue, la douille de guidage (13) présentant au niveau d'un côté d'extrémité, une bride (16) périphérique, orientée radialement vers l'extérieur, en position adjacente contre laquelle est disposée l'unité d'étanchéité (14), l'unité d'étanchéité (14, 15) étant réalisée au moins sous forme d'un élément d'étanchéité de tige (14) et d'un élément d'étanchéité extérieur (15), l'élément d'étanchéité de tige (14) étant adjacent à une plaque d'extrémité plane (16a) de la bride (16) terminant axialement la douille de guidage (13), le corps de base (11) présentant un siège de bride périphérique (17) dans lequel s'insère la bride (16), notamment de telle sorte que la surface d'extrémité plane (16a) de la bride (16) se termine avec la surface d'appui d'étanchéité (11a) sur le corps de base (11), une plaque de fermeture (18) étant prévue, avec laquelle l'unité d'étanchéité (14, 15) est retenue dans le corps de base (11), l'élément d'étanchéité extérieur (15) formant une bague de support entre l'élément d'étanchéité de tige (14) et la plaque de fermeture, **caractérisé en ce que** la douille de guidage (13) dépasse radialement à l'intérieur au-delà de l'élément d'étanchéité de tige (14) adjacent à celle-ci dans la région de contact entre la douille de guidage (13) et l'unité d'étanchéité (14).
